# EUROPEAN PATENT SPECIFICATION

(11) **EP 1 174 895 B1**
(45) Date of publication and mention of the grant of the patent: **27.08.2008**
(21) Application number: 01114177.7
(22) Date of filing: 12.06.2001
(51) Int. Cl.: H01H 35/18

(54) **Fluid level sensing switch**
Flüssigkeitsstandsschalter
Commutateur-détecteur du niveau d'un fluide

(30) Priority: 18.07.2000 US 618688
(43) Date of publication of application: 23.01.2002
(73) Proprietor: Continental Automotive GmbH, 30165 Hannover (DE)
(72) Inventor: van Zuilen, David M., Frement, IN 46737 (US)

(56) References cited:
- US-A- 4 600 820
- US-A- 4 848 151
- US-A- 5 042 300

## Description

### BACKGROUND OF THE INVENTION

The present invention generally relates to an electrical switch which includes a fluid level sensor, and more particularly to a switch that is adapted to automatically complete an electrical circuit when the volume of fluid being monitored is below a predetermined level.

In many devices that house fluids within a reservoir, it is desirable to monitor the fluid level. In certain devices it may be advantageous to change an operating parameter when the volume of fluid falls below a predetermined level. For instance, it would be desirable to automatically shut off an internal combustion engine if the level of lubricating oil in the engine crankcase becomes inadequate. It also would be desirable to shut off a pump such as that used in a bilge of a boat, once the water level is sufficiently reduced. Likewise, it would be desirable to provide a low fluid level warning to users of consumable fluid products stored in tanks, such as home heating oil.

Problems associated with ignoring low fluid conditions vary from matters of inconvenience, to safety, to major system damage. For instance, the result of a loss of oil or a low oil condition during the operation of relatively small spark ignition engines, such as those used in power generators or lawn mowers, are well known in the art and are described, in part, in U.S. Patent 4,600,820. In general, if such engines experience operating conditions involving a rapid loss of oil, unintended extreme tilting of the engine, or simply insufficient maintenance, they may lack access to a sufficient supply of oil to adequately lubricate the internal components of the engine. Continued operation of an engine experiencing such a condition may lead to severe engine damage and could present a safety hazard.

The switch used with spark ignition engines that is disclosed in the aforementioned U.S. patent, exhibits certain disadvantages that are overcome by the present invention. In particular, the prior art device is designed to shut off an engine by grounding the ignition system in the event of a low oil level. The switch is mounted horizontally, through a side wall of an engine crankcase. Hence, the device is likely to be overly sensitive to engine tilting because the device will likely be mounted closely adjacent a side wall of the crankcase. Also, the entire switch assembly, including its balance beam float assembly and switching lever, are contained within a horizontal encapsulating shield having slots and holes. The slots and holes permit communication with the oil in the crankcase and the escape of foam and bubbles in the oil.

The horizontal mounting of the prior art assembly in an engine crankcase, and its need to be located in the vicinity of the top surface of the oil when the oil level is at a predetermined maximum recommended level, also subject the device to considerable turbulence and fluctuations in the oil due to splashing and aeration generated by the use of a common crankshaft mounted splasher device. These conditions may result in less reliable performance of the switch, and may lead to intermittent operation of the ignition system. In addition, the balance beam assembly utilized in the prior art device does not appear well suited to cope with more violent and higher amplitude vibrations, such as those encountered once the ignition has been interrupted in a spark ignition engine. Similar disadvantages would be experienced if the prior art device is used to automatically shut off a diesel engine by interrupting an electronically controlled fuel supply system under low oil level conditions.

Additional prior art designs used for low fluid level conditions, such as in automatic engine shut off applications, include a glass reed switch with a floating magnet. One problem with this technology is that the pair of glass reeds in such a switch are very thin and tend to become welded together if too much electrical current is applied to the switch. In the case of an ignition cut off switch which is designed to ground the ignition system of a relatively small spark ignition engine under low oil level conditions, the reeds may become permanently joined due to a current that may be in a range as low as approximately 2 to 5 amps. In the event of such a switch failure, even after adding oil to reach a safe level, the ignition system will remain grounded and the engine will not be able to be restarted until the switch is replaced.

Some manufacturers using glass reed switches have added electrical devices such as a Triac to accommodate the operating amperages. Such additional components add significantly to the cost of the switch, yet do not alleviate other problems with glass reed switches, such as sensitivity to high temperature and shock.

In light of the shortcomings of the above-mentioned exemplary prior art devices, it is desirable to have a switch which combines fluid level sensing and automatic opening and closing of an electrical circuit, and which permits an improved mounting position to reduce sensitivity to fluid reservoir tilting. It is further advantageous to provide a switch device that is less sensitive to turbulence and fluctuations in fluid level that are present in some operating environments, such as splashing and aeration. It also is advantageous that a fluid level sensing switch have rotational torque characteristics that are less susceptible to intermittent operation during large amplitude, varied and lower frequency movements, such as the vibrations commonly experienced during shut down of an internal combustion engine. The present invention overcomes the disadvantages of the prior art, while providing the above mentioned desirable features of a fluid level sensing switch.

### SUMMARY OF THE INVENTION

In accordance with a first aspect of the present invention, a fluid level sensing switch comprises a base; a float pivotally connected to the base; a counterweight pivotally connected to the base; a linkage; an electrically conductive damper pivotally connected to the base; an electrically conductive terminal connected to the base; and an electrically conductive pin connected to the conductive damper and the base; wherein the linkage is pivotally connected to the float at a first end and pivotally connected to the counterweight at a second end; and, wherein, if a volume of fluid falls below a predetermined sufficient level, then the float pivots downwards, forcing the counterweight into the conductive damper, which in turn contacts the terminal, such that the switch with its conductive pin, is closed and completes a circuit.

In accordance with a second aspect of the present invention, a method of providing a fluid level sensing switch for use in monitoring a volume of fluid in a reservoir and for automatically opening and closing a circuit in accordance with predetermined fluid levels in the reservoir compris es installing in an electrically conductive reservoir a fluid level sensing switch having a base; a float pivotally connected to the base; a counterweight pivotally connected to the base; a linkage; an electrically conductive damper pivotally connected to the base; an electrically conductive terminal; and an electrically conductive pin connected to the conductive damper and the base and in contact with the reservoir; wherein the linkage is pivotally connected to the float at a first end and pivotally connected to the counterweight at a second end; wherein if a volume of fluid falls below a predetermined sufficient level, then the float pivots downwards, forcing the counterweight into the conductive damper, which in turn contacts the terminal, such that the switch with its conductive pin, is closed; and wherein the electrically conductive terminal is connected to the circuit and completes the circuit.

The present invention is generally embodied in an improved fluid level sensing switch. The switch comprises a base, a float pivotally connected to the base, a counterweight pivotally connected to the base, a linkage connecting the float and the counterweight, a conductive damper, an electrical terminal and a conductive pin.

When the volume of fluid is at or above a predetermined sufficient level, the switch remains open. If the volume of fluid falls below the predetermined sufficient level, then the float pivots downward, forcing the counterweight into the conductive damper, which in turn contacts the terminal. In this condition, the switch is closed and completes the circuit.

In another aspect of the invention, the counterweight is formed of a material that is of greater density than the material of the float.

In still another aspect of the invention, the conductive damper, conductive pin and terminal may be of sufficient physical size to enable them to carry sufficient amperage reliably, so as not to require additional electronic devices, such as a Triac, to accommodate the operating amperage in the circuit. Indeed, the invention lends itself to use of components tailored to specific needs, and can be structured to carry relatively low amperages, or current in excess of 60 amps.

In a further aspect of the invention, the electrical terminal includes a magnet. The magnet provides a hysteresis effect to prevent unintended intermittent opening and closing of the switch, such as during the more violent vibrations encountered in shutting off an engine. The magnet helps maintain contact between the conductive damper and the terminal, thus keeping the switch closed, for instance to ground an engine ignition system, until a sufficient fluid level raises the float. As the float is raised by an increase in fluid level, the linked counterweight pivots which, in turn, forces the conductive damper to break its magnetic coupling to the terminal, opening the switch.

In another aspect of the invention, the switch has a cover attached to the base.

In still another aspect of the invention, the cover is adapted to be snap fit over the base.

In a further aspect of the invention, the cover has at least one opening arranged at or near its top, and at least one opening, such as a hole or slot near its bottom. The upper opening or openings allow air to pass out of the fluid that is within the cover, while the lower opening or openings permit fluid near the bottom of the reservoir in which the switch is housed to enter and exit the device through the cover. Communication with fluid that is very low in the reservoir reduces the sensitivity of the switch to conditions that involve turbulence, splashing or aeration, because the switch is protected by the cover, and because fluid near the bottom of the reservoir is less likely to be turbulent or to contain air bubbles or foam.

In a further aspect of the invention, the base of the switch is adapted to be mounted vertically, to extend upward from the bottom of a reservoir. Therefore, sensitivity to tilting of a reservoir can be reduced by mounting the switch very close to the center of the reservoir, where the fluid level will generally be most stable. Moreover, in a particularly advantageous aspect of the invention, the switch may be adapted to be mounted through the bottom wall of a reservoir. This mounting configuration would permit convenient withdrawal of the switch from the bottom of the reservoir for service or replacement.

In yet a further aspect of the invention, the switch uses a four bar linkage to generate sufficient torque to operate the float and counterweight, and to overcome wet film sticking between components. The four bar linkage further permits a very compact switch structure. The switch enjoys damping a wide range of vibration amplitudes and frequencies due to the enhanced torque management characteristics obtained by use of a float and a counterweight that are each separately pivotally mounted and that are connected via a linkage, in further conjunction with a low mass conductive damper.

It is to be understood that both the foregoing general description and the following detailed description of a preferred embodiment of the present invention in the form of a low oil level ignition cut off switch are exemplary, provided for purposes of explanation only, and are not restrictive of the invention as claimed.

### BRIEF DESCRIPTION OF THE DRAWINGS

The drawings depict a fluid level sensing switch of the present invention in the form of a low oil level ignition cut off switch for a spark ignition engine. In describing the preferred embodiment, reference is made to the accompanying drawings wherein like parts have like reference numerals, and wherein:
FIG. 1 is a side cross section view of a preferred embodiment of fluid level sensing switch in accordance with the present invention, except with a conductive damper shown in side view. The switch is shown in the open position, with the float in its highest position.
FIG. 2 is a side cross section view of the preferred embodiment similar that shown in FIG. 1, but with the switch shown in the closed position, and the float in its lowest position.
FIG. 3 is an end cross section view of the preferred embodiment through the center of the device. The switch is shown in the closed position, but with the float shown in an intermediate position.
FIG. 4 is an exploded view of the preferred embodiment, without the cover, mounting gasket and compression limiters, and terminal connecting spring and wire.
FIG. 5 is a perspective view of the assembled components of FIG. 4, further showing the cover, mounting gasket and compression limiters and terminal connecting spring and wire in an exploded view.
It should be understood that the drawings are not to scale and that certain aspects may be illustrated in phantom views. While considerable mechanical details of a fluid level sensing switch, including details of fastening means and other plan and section views of the preferred embodiment, depicting the invention in the form of a low oil level cut off switch, have been omitted, such detail is not per se part of the present invention and is considered well within the comprehension of those skilled in the art in light of the present disclosure. It should also be understood that the present invention is not limited to the preferred embodiment illustrated.

### DETAILED DESCRIPTION OF THE PREFERRED EMBODIMENT

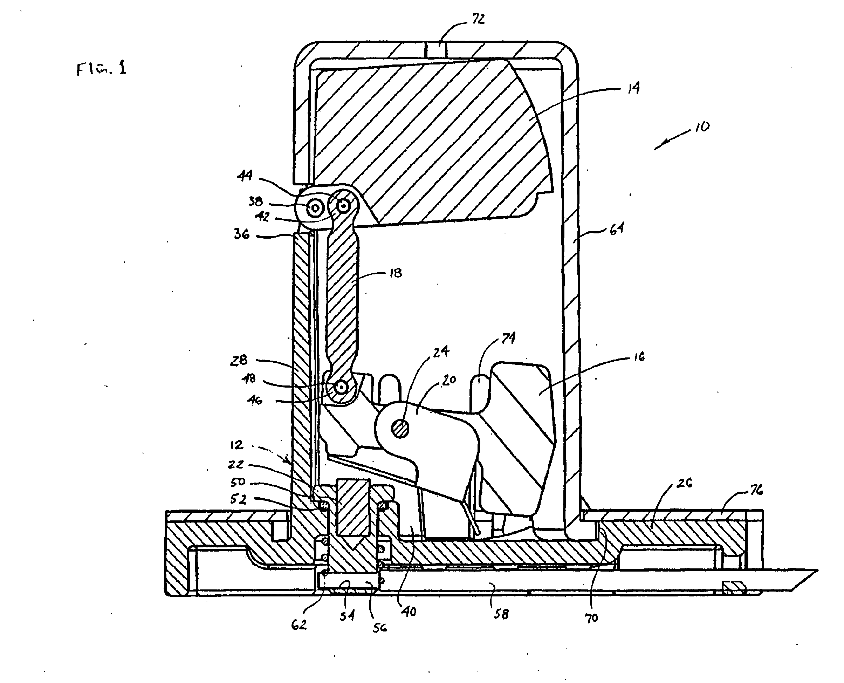

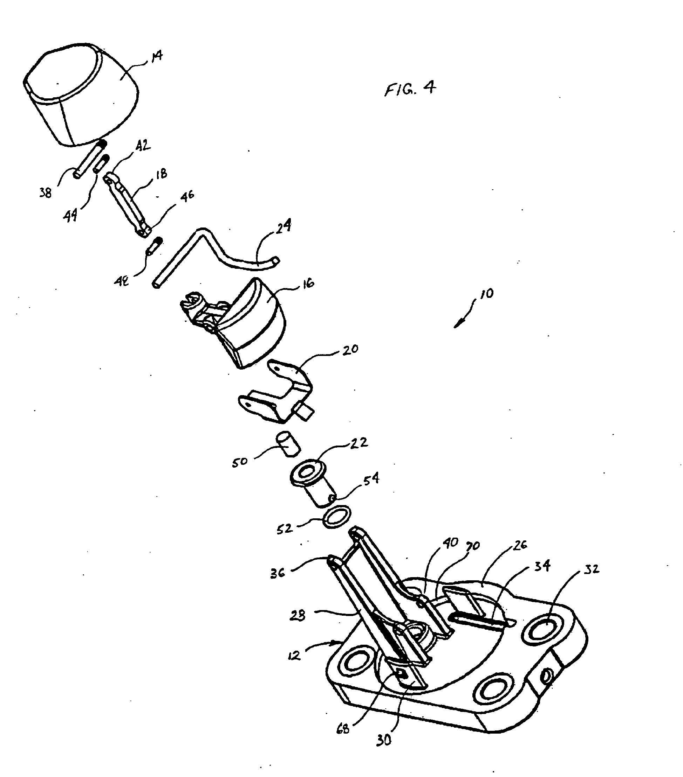

Referring to the above discussion it will be appreciated that the present invention generally may be embodied in numerous configurations of a fluid level sensing switch that is adapted to automatically complete an electrical circuit when the volume of fluid being monitored is below a predetermined level. Referring to FIGS. 1-5, a preferred embodiment of the present invention is shown as it is generally embodied in a low oil level cut off switch. The fluid level sensing switch 10 includes a base 12, a float 14 pivotally connected to the base 12, a counterweight 16 pivotally connected to the base12, and a linkage 18 connecting the float 14 and the counterweight 16. The switch 10 further includes a conductive damper 20, an electrical terminal 22 and a conductive pin 24.

The material requirements for components of the fluid level sensing switch will depend upon the particular switch structure and its anticipated operating environment. In an operating environment such as that which could be expected for this exemplary embodiment of a low oil level ignition cut off switch, the base 12 would be required to be rigid and to withstand a significant range of temperature, such as from approximately -40° C to 177° C, as well as vibrations up to approximately 30 g's. The base 12 would also be required to be resistant to body impact, as well as submersion in petroleum products, such as lubricants or fuels, and solvent sprays, such as are commonly used in degreasing. Accordingly, the base 12 of this exemplary embodiment would preferably be formed of a plastic, such as of the Nylon 6-6® type, or of other suitable materials, such as PPA, PCT, PEI, or PEK.

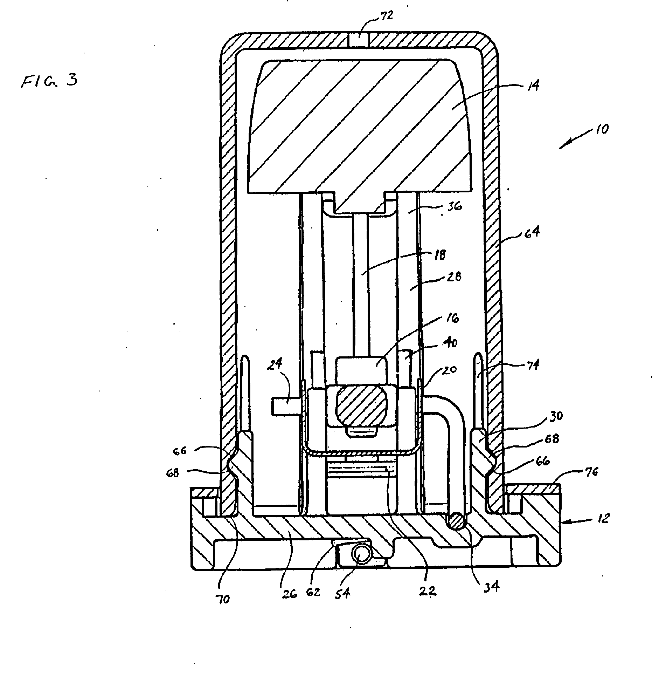

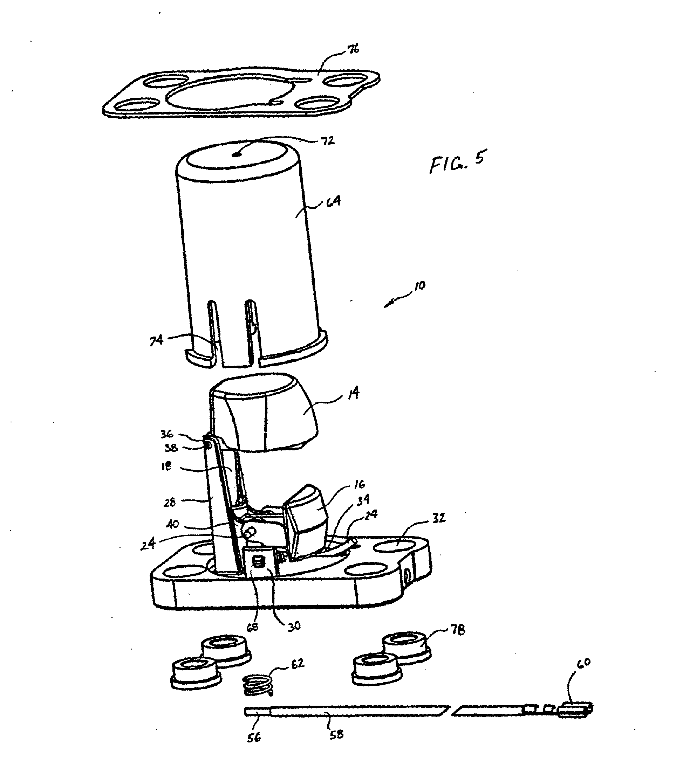

The base 12 of the preferred embodiment includes a generally horizontal portion 26 and an upstanding, two-tiered pedestal portion 28. Referring to FIGS. 3-5, the base 12 also may incorporate upstanding tab portions 30 to provide fastening means. The base 12 further includes mounting holes 32 and a slot 34 for conductive pin 24. As shown in FIG. 5, pin 24 preferably projects upward from the base 12. Thus, when switch 10 is installed on the outer bottom wall of an electrically conductive engine crankcase (not shown), the conductive pin 24 will contact the crankcase and accordingly be capable of sinking a sufficient amount of current and voltage to ground the ignition system and stop the engine without damage to the switch.

As is best shown in FIGS. 1, 2 and 4, the float 14 is preferably pivotally mounted at its rear to the base 12 proximate the upper tier 36 of the pedestal portion 28, via press fit pin 38. The counterweight 16 and conductive damper 20 are both preferably pivotally mounted along their respective lengths to the base 12 proximate the lower tier 40 of the pedestal portion 28, via conductive pin 24, although one will appreciate that they may utilize separate pivot axes. The linkage 18 is pivotally connected at a first end 42 to the float 14 forward of pin 38, via press fit pin 44. The linkage 18 is further pivotally connected at a second end 46 to the counterweight 16 at its rear, via press fit pin 48. While press fit pins, preferably made of 1010 cold rolled steel, are employed in the exemplary embodiment, one skilled in the art will appreciate that other fasteners and structures for pivoting may be employed, as well as alternative suitable materials.

The float 14 is preferably solid, has a density greater than the fluid, and has similar material requirements to the base 12. Despite having a density greater than the fluid in which the float 14 is located, the float 14 experiences two forces which tend to provide lift. First, the buoyant force produced by the volume of the fluid that is displaced by the float 14 itself. Second, the counterweight 16 is configured to preferably bias the rear of the counterweight 16 upward to assist in forcing the float 14 to pivot upward through linkage 18. The bias of the counterweight 16 and a similar configured bias of the conductive damper 20 tend to cause the two to pivot away from the terminal 22 at the rear, holding the switch 10 in the open position. The material of counterweight 16 of the preferred embodiment has a density greater than the material of float 14, but otherwise has similar environmental requirements. Accordingly, the counterweight 16 of the switch 10 may be constructed of a material such as Zamac®, a pot metal, sintered powdered metal, or any other suitable alternative material.

The damper 20 is rigid, of low overall mass, and has similar environmental requirements to those of float 14 and counterweight 16. It may be constructed of suitable conductive material, such as 1010 cold rolled steel. The conductive damper 20 pivots on conductive pin 24, which is made of suitable electrically conductive material, such as spring steel. The terminal 22 also is made of a suitable electrically conductive material, such as 1010 cold rolled steel, and is fitted within the base 12. Terminal 22 further houses a press fit magnetic insert 50 which may be made of Alnico®, or other suitable magnetic material. This construction allows the damper 20 to be attracted to the magnetically charged terminal 22. Thus, if switch 10 experiences a closed position, the damper 20 is adapted to remain in magnetic contact with the terminal 22 until the float 14 pivots upward and the forward end of the counterweight 16 rotates downward, contacting the damper 20 at its end opposite and forcing it to break the magnetic bond to the terminal 22. The low mass of damper 20 reduces the likelihood that damper 20 will become magnetically decoupled from terminal 22 due to the vibration experienced during engine shut down.

In this embodiment, a seal 52, such as of the Viton® rubber O-ring type, is used to seal the terminal 22 to the base 12. The terminal 22 further has a hole 54 therethrough to accept a first end 56 of a wire 58 which is to be connected at its second end 60 to the low voltage side of an engine's spark ignition coil (not shown). A spring 62 is used to hold the wire 58 in conductive engagement with the terminal 22, which also serves to hold the terminal 22 within the base 12. The spring 62 is preferably constructed of suitable material, such as spring steel.

It is preferable that the switch of the present invention include a protective cover 64 attached to the base 12. The cover 64 of the preferred embodiment has material requirements similar to those of float 14, and may be constructed of like material. In the preferred embodiment, as shown in FIG. 3, the cover 64 has opposed recesses 66 in its inner wall, which engage locking detents 68 on tab portions 30, so as to hold the cover 64 within a groove 70 of the base 12.

The cover 64 has at least one opening 72 arranged at or near its top. The upper opening 72 of the preferred embodiment allows air to pass out of the oil that is within the cover 64. The cover 64 further has at least one opening, such as a hole or slot 74 near its bottom. The lower opening or openings 74 permit oil near the bottom of the crankcase to enter and exit the device through the cover 64. Communication with oil that is very low in the crankcase reduces the sensitivity of the switch 10 to turbulence, splashing and aeration, because the switch 10 is protected by the cover, and because oil near the bottom of the crankcase is less likely to be turbulent or to contain air bubbles or foam. Also, the openings 72 and 74 may be relatively small to help limit the exposure of the switch 10 to metal shavings which may contaminate the oil.

Referring to FIG. 5, to seal the switch 10 to the bottom of an engine (not shown), the preferred embodiment employs a gasket 76, such as of common compressed paper or other suitable type. The switch 10 further may use compression limiters 78, preferably constructed of aluminum or other suitable material, to prevent crushing of the non conductive base 12 when installing the switch 10 to the engine with fasteners such as bolts (not shown).

In operation, as shown in FIG. 1, if the fluid level in the reservoir is at or above a predetermined minimum level, the float 14 will achieve its upward most pivotal position, while the end of counterweight 16 which is forward and of greater mass will achieve its lowest position. In such coordinated positions, the counterweight 16 will not permit the electrically conductive damper 20 to contact terminal 22. Rather, conductive damper 20 will rotate to a position leaving the switch 10 in an open position.

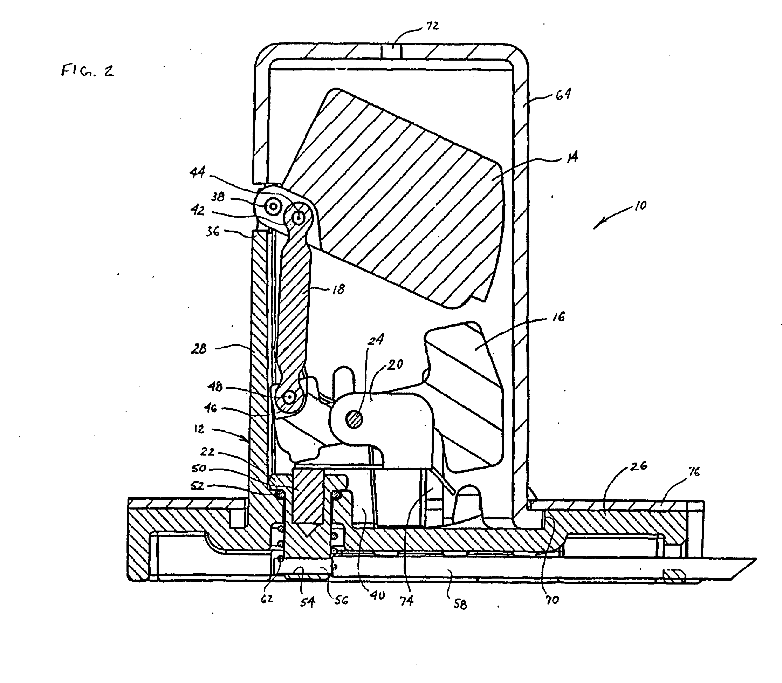

If the fluid level is reduced to a point below a predetermined minimum safe operating level, then as seen in FIG. 2, the float 14 will pivot downward, driving the rear end of the counterweight 16 into the conductive damper 20 and, in turn forcing the damper 20 to achieve a magnetic coupling to terminal 22. When this occurs in the exemplary embodiment, the ignition system of the engine is linked through the switch 10, with its conductive pin 24, to the electrically conductive engine crankcase. This closing of the switch 10 and resulting closing of the ground circuit, causes the ignition system to ground out, shutting off the engine.

Once the engine has reached a low oil condition and experience automatic shut off via the fluid level sensing switch 10, the conductive damper 20 will remain magnetically coupled to terminal 22 until the fluid level in the crankcase is increased sufficiently to raise the float 14. In this instance, the counterweight 16 will be forced to pivot about the conductive pin 24, driving its forward end downward. As the forward end of the counterweight 16 moves downward, it contacts the forward end of the damper 20, forcing the damper 20 to pull away from its magnetic coupling to terminal 22. When the damper 20 is decoupled from terminal 22, the switch 10 is open. With the switch 10 in the open position, the ground circuit is open, permitting normal operation of the engine ignition system.

It will be apparent to those skilled in the art that various modifications and variations can be made in the design and construction of a fluid level sensing switch without departing from the scope of protection as defined by the claims. It also should be understood that any of a variety of fastening means and suitable materials of construction and dimensions may be used to satisfy the particular needs and requirements of the end user. Other embodiments of the invention will be apparent to those skilled in the art from consideration of the specification and practice of the invention disclosed herein.

## Claims

1. A fluid level sensing switch (10) comprising:
a base (12);
a float (14) pivotally connected to the base;
a counterweight (16) pivotally connected to the base;
an electrically conductive damper (20) pivotally connected to the base;
an electrically conductive terminal (22) connected to the base; and
an electrically conductive pin (24) connected to the conductive damper and the base; wherein, if a volume of fluid falls below a predetermined sufficient level, then the float pivots downwards, forcing the counterweight (16) into the conductive damper (20), which in turn contacts the terminal (22), such that the switch with its conductive pin (24), is closed and completes a circuit, **characterised in that** the switch comprises a linkage (18), wherein the linkage is pivotally connected to the float at a first end and pivotally connected to the counterweight at a second end.

2. A fluid level sensing switch in accordance with claim 1, wherein said conductive damper (20) is pivotally connected to the conductive pin (24).

3. A fluid level sensing switch in accordance with claim 2, wherein said counterweight (16) is pivotally connected to the conductive pin (24).

4. A fluid level sensing switch in accordance with claim 1, wherein said conductive damper (20) is of lower mass than said counterweight (16).

5. A fluid level sensing switch in accordance with claim 1, wherein said float (14) is made of a material that is of greater density than the fluid in which said float is intended to be used.

6. A fluid level sensing switch in accordance with claim 1, wherein said counterweight (16) is made of a material that is of greater density than the material of which the float (14) is made.

7. A fluid level sensing switch in accordance with claim 1, wherein said conductive damper (20), terminal (22) and pin (24) are of sufficient size to carry a current greater than 5 amps.

8. A fluid level sensing switch in accordance with claim 1, further comprising a cover (64) having at least one opening.

9. A fluid level sensing switch in accordance with claim 8, wherein said cover further comprises at least one upper opening (72) and at least one lower opening (74).

10. A fluid level sensing switch in accordance with claim 1, wherein said electrically conductive terminal (22) further comprises a magnet (50).

11. A fluid level sensing switch in accordance with claim 1, wherein said switch (10) is adapted for mounting to the bottom wall of a reservoir.

12. A fluid level sensing switch in accordance with claim 11, wherein said switch (10) is adapted for mounting through a bottom wall of a reservoir.

13. A fluid level sensing switch in accordance with claim 1, wherein said switch (10) further comprises a wire (58) connected to said conductive terminal (22) and a spring (62), wherein the spring and wire are adapted to retain the electrically conductive terminal in the base (12).

14. A fluid level sensing switch in accordance with claim 1, wherein said conductive terminal of said switch is electrically connected to the ignition system of an engine and the conductive damper is electrically connected to an electrically conductive engine crankcase.

15. A fluid level sensing switch in accordance with claim 14, further comprising a wire connected at a first end to said terminal (22) and at a second end to an ignition system coil.

16. A fluid level sensing switch in accordance with claim 1, wherein said switch (10) is adapted for use in monitoring the volume of lubricating fluid in a crankcase of a spark ignition engine and is further adapted to automatically ground the ignition system in said engine if the volume of fluid falls below a predetermined level.

17. A fluid level sensing switch in accordance with claim 1, wherein said switch (10) is adapted for use in monitoring the volume of lubricating fluid in a crankcase of a diesel engine and is further adapted to be used to automatically interrupt fuel delivery in said engine if the volume of fluid falls below a predetermined level.

18. A method of providing a fluid level sensing switch for use in monitoring a volume of fluid in a reservoir and for automatically opening and closing a circuit in accordance with predetermined fluid levels in the reservoir, the method comprising:
installing in an electrically conductive reservoir a fluid level sensing switch (10) having a base (12); a float (14) pivotally connected to the base; a counterweight (16) pivotally connected to the base; an electrically conductive damper (20) pivotally connected to the base; an electrically conductive terminal (22); and an electrically conductive pin (24) connected to the conductive damper and the base and in contact with the reservoir; wherein if a volume of fluid falls below a predetermined sufficient level, then the float pivots downwards, forcing the counterweight (16) into the conductive damper (20), which in turn contacts the terminal (22), such that the switch with its conductive pin (24), is closed; and wherein the electrically conductive terminal (22) is connected to the circuit and completes the circuit, **characterised in that** the switch comprises a linkage (18); wherein the linkage (18) is pivotally connected to the float (14) at a first end and pivotally connected to the counterweight (16) at a second end.

19. A method of providing a fluid level sensing switch in accordance with claim 18, wherein the switch (10) further comprises a wire (58) to connect the electrically conductive terminal (22) to said circuit, and a spring (62) to connect the wire to the terminal.

20. A method of providing a fluid level sensing switch in accordance with claim 19 wherein the spring (62) and the wire (58) are adapted to retain the electrically conductive terminal (22) in the base (12).

## Patentansprüche

1. Flüssigkeitsstandsschalter (10), welcher umfasst:
einen Fuß (12);
einen Schwimmer (14), der drehgelenkig mit dem Fuß verbunden ist;
ein Gegengewicht (16), das drehgelenkig mit dem Fuß verbunden ist;
einen elektrisch leitfähigen Dämpfer (20), der drehgelenkig mit dem Fuß verbunden ist;
ein elektrisch leitfähiges Anschlussstück (22), das mit dem Fuß verbunden ist; und
einen elektrisch leitfähigen Bolzen (24), der mit dem leitfähigen Dämpfer und dem Fuß verbunden ist;
wobei, falls ein Flüssigkeitsvolumen unter einen vorbestimmten ausreichenden Pegel absinkt, der Schwimmer nach unten schwenkt, wobei er das Gegengewicht (16) in den leitfähigen Dämpfer (20) drückt, welcher wiederum mit dem Anschlussstück (22) in Kontakt kommt, so dass der Schalter mit seinem leitfähigen Bolzen (24) geschlossen wird und einen Stromkreis schließt, **dadurch gekennzeichnet, dass** der Schalter ein Verbindungsstück (18) umfasst, wobei das Verbindungsstück an einem ersten Ende mit dem Schwimmer drehgelenkig verbunden ist und an einem zweiten Ende mit dem Gegengewicht drehgelenkig verbunden ist.

2. Flüssigkeitsstandsschalter nach Anspruch 1, wobei der besagte leitfähige Dämpfer (20) mit dem leitfähigen Bolzen (24) drehgelenkig verbunden ist.

3. Flüssigkeitsstandsschalter nach Anspruch 2, wobei das besagte Gegengewicht (16) mit dem leitfähigen Bolzen (24) drehgelenkig verbunden ist.

4. Flüssigkeitsstandsschalter nach Anspruch 1, wobei der besagte leitfähige Dämpfer (20) eine geringere Masse als das besagte Gegengewicht (16) hat.

5. Flüssigkeitsstandsschalter nach Anspruch 1, wobei der besagte Schwimmer (14) aus einem Material hergestellt ist, welches eine größere Dichte als die Flüssigkeit hat, in welcher der besagte Schwimmer verwendet werden soll.

6. Flüssigkeitsstandsschalter nach Anspruch 1, wobei das besagte Gegengewicht (16) aus einem Material hergestellt ist, welches eine größere Dichte als das Material hat, aus welchem der Schwimmer (14) hergestellt ist.

7. Flüssigkeitsstandsschalter nach Anspruch 1, wobei der besagte leitfähige Dämpfer (20), das Anschlussstück (22) und der Bolzen (24) eine ausreichende Größe haben, um einen Strom zu leiten, der größer als 5 A ist.

8. Flüssigkeitsstandsschalter nach Anspruch 1, der ferner eine Abdeckung (64) umfasst, die wenigstens eine Öffnung aufweist.

9. Flüssigkeitsstandsschalter nach Anspruch 8, wobei die besagte Abdeckung ferner wenigstens eine obere Öffnung (72) und wenigstens eine untere Öffnung (74) umfasst.

10. Flüssigkeitsstandsschalter nach Anspruch 1, wobei das besagte elektrisch leitfähige Anschlussstück (22) ferner einen Magneten (50) umfasst.

11. Flüssigkeitsstandsschalter nach Anspruch 1, wobei der besagte Schalter (10) dazu eingerichtet ist, an der Bodenwand eines Behälters angebracht zu werden.

12. Flüssigkeitsstandsschalter nach Anspruch 11, wobei der besagte Schalter (10) dazu eingerichtet ist, durch eine Bodenwand eines Behälters hindurch montiert zu werden.

13. Flüssigkeitsstandsschalter nach Anspruch 1, wobei der besagte Schalter (10) ferner einen Draht (58), der mit dem besagten leitfähigen Anschlussstück (22) verbunden ist, und eine Feder (62) umfasst, wobei die Feder und der Draht dazu eingerichtet sind, das elektrisch leitfähige Anschlussstück in dem Fuß (12) zu halten.

14. Flüssigkeitsstandsschalter nach Anspruch 1, wobei das besagte leitfähige Anschlussstück des besagten Schalters elektrisch mit der Zündanlage eines Motors verbunden ist und der leitfähige Dämpfer elektrisch mit einem elektrisch leitfähigen Motorkurbelgehäuse verbunden ist.

15. Flüssigkeitsstandsschalter nach Anspruch 14, welcher ferner einen Draht umfasst, der an einem ersten Ende mit dem besagten Anschlussstück (22) und an einem zweiten Ende mit einer Spule der Zündanlage verbunden ist.

16. Flüssigkeitsstandsschalter nach Anspruch 1, wobei der besagte Schalter (10) für eine Verwendung bei der Überwachung des Volumens von Schmierflüssigkeit in einem Kurbelgehäuse eines Motors mit elektrischer Zündung eingerichtet ist und ferner dazu eingerichtet ist, automatisch die Zündanlage in dem besagten Motor zu erden, falls das Flüssigkeitsvolumen unter einen vorbestimmten Pegel absinkt.

17. Flüssigkeitsstandsschalter nach Anspruch 1, wobei der besagte Schalter (10) für eine Verwendung bei der Überwachung des Volumens von Schmierflüssigkeit in einem Kurbelgehäuse eines Dieselmotors eingerichtet ist und ferner dazu eingerichtet ist, verwendet zu werden, um automatisch die Kraftstoffzufuhr in dem besagten Motor zu unterbrechen, falls das Flüssigkeitsvolumen unter einen vorbestimmten Pegel absinkt.

18. Verfahren zum Bereitstellen eines Flüssigkeitsstandsschalters zur Verwendung bei der Überwachung eines Flüssigkeitsvolumens in einem Behälter und zum automatischen Öffnen und Schließen eines Stromkreises entsprechend vorbestimmten Flüssigkeitspegeln in dem Behälter, wobei das Verfahren umfasst:
Installieren, in einem elektrisch leitfähigen Behälter, eines Flüssigkeitsstandsschalters (10), welcher aufweist: einen Fuß (12); einen Schwimmer (14), der drehgelenkig mit dem Fuß verbunden ist; ein Gegengewicht (16), das drehgelenkig mit dem Fuß verbunden ist; einen elektrisch leitfähigen Dämpfer (20), der drehgelenkig mit dem Fuß verbunden ist; ein elektrisch leitfähiges Anschlussstück (22); und einen elektrisch leitfähigen Bolzen (24), der mit dem leitfähigen Dämpfer und dem Fuß verbunden ist und sich mit dem Behälter in Kontakt befindet; wobei, falls ein Flüssigkeitsvolumen unter einen vorbestimmten ausreichenden Pegel absinkt, der Schwimmer nach unten schwenkt, wobei er das Gegengewicht (16) in den leitfähigen Dämpfer (20) drückt, welcher wiederum mit dem Anschlussstück (22) in Kontakt kommt, so dass der Schalter mit seinem leitfähigen Bolzen (24) geschlossen wird; und wobei das elektrisch leitfähige Anschlussstück (22) mit dem Stromkreis verbunden wird und den Stromkreis schließt, **dadurch gekennzeichnet, dass** der Schalter ein Verbindungsstück (18) umfasst, wobei das Verbindungsstück (18) an einem ersten Ende mit dem Schwimmer (14) drehgelenkig verbunden ist und an einem zweiten Ende mit dem Gegengewicht (16) drehgelenkig verbunden ist.

19. Verfahren zum Bereitstellen eines Flüssigkeitsstandsschalters nach Anspruch 18, wobei der Schalter (10) ferner einen Draht (58), um das elektrisch leitfähige Anschlussstück (22) mit dem besagten Stromkreis zu verbinden, und eine Feder (62), um den Draht mit dem Anschlussstück zu verbinden, umfasst.

20. Verfahren zum Bereitstellen eines Flüssigkeitsstandsschalters nach Anspruch 19, wobei die Feder (62) und der Draht (58) dazu eingerichtet sind, das elektrisch leitfähige Anschlussstück (22) in dem Fuß (12) zu halten.

## Revendications

1. Commutateur de détection du niveau d'un fluide (10) comprenant :
une base (12) ;
un flotteur (14) attaché à pivotement à la base ;
un contrepoids (16) attaché à pivotement à la base ;
un amortisseur électroconducteur (20) attaché à pivotement à la base ;
une borne électroconductrice (22) attachée à la base, et un axe électroconducteur (24) attaché à l'amortisseur conducteur et à la base, en sachant que, si un volume de fluide tombe sous un niveau suffisant prédéterminé, le flotteur pivote vers le bas, forçant le contrepoids (16) à pénétrer dans l'amortisseur conducteur (20), lequel entre pour sa part en contact avec la borne (22), de telle sorte que le commutateur, avec son axe conducteur (24), soit fermé et complète un circuit, **caractérisé en ce que** le commutateur comprend une tringlerie (18), la tringlerie étant attachée à pivotement au flotteur par une première extrémité et attachée à pivotement au contrepoids par une seconde extrémité.

2. Commutateur de détection du niveau d'un fluide selon la revendication 1, dans lequel ledit amortisseur conducteur (20) est attaché à pivotement à l'axe conducteur (24).

3. Commutateur de détection du niveau d'un fluide selon la revendication 2, dans lequel ledit contrepoids (16) est attaché à pivotement à l'axe conducteur (24).

4. Commutateur de détection du niveau d'un fluide selon la revendication 1, dans lequel ledit amortisseur conducteur (20) est de masse inférieure audit contrepoids (16).

5. Commutateur de détection du niveau d'un fluide selon la revendication 1, dans lequel ledit flotteur (14) est fait d'un matériau qui est de densité plus grande que le fluide dans lequel ledit flotteur est destiné à être utilisé.

6. Commutateur de détection du niveau d'un fluide selon la revendication 1, dans lequel ledit contrepoids (16) est fait d'un matériau qui est de densité plus grande que le matériau dont le flotteur (14) est fait.

7. Commutateur de détection du niveau d'un fluide selon la revendication 1, dans lequel lesdits amortisseur (20), borne (22) et axe (24) conducteurs sont d'une taille suffisante pour transporter un courant d'intensité supérieure à 5 ampères.

8. Commutateur de détection du niveau d'un fluide selon la revendication 1, comprenant par ailleurs un couvercle (64) comportant au moins une ouverture.

9. Commutateur de détection du niveau d'un fluide selon la revendication 8, dans lequel ledit couvercle comprend par ailleurs au moins une ouverture supérieure (72) et au moins une ouverture inférieure (74).

10. Commutateur de détection du niveau d'un fluide selon la revendication 1, dans lequel ladite borne électroconductrice (22) comprend par ailleurs un aimant (50).

11. Commutateur de détection du niveau d'un fluide selon la revendication 1, dans lequel ledit commutateur (10) est adapté pour être monté sur la paroi du fond d'un réservoir.

12. Commutateur de détection du niveau d'un fluide selon la revendication 11, dans lequel ledit commutateur (10) est adapté pour être monté à travers une paroi du fond d'un réservoir.

13. Commutateur de détection du niveau d'un fluide selon la revendication 1, dans lequel ledit commutateur (10) comprend par ailleurs un fil (58) relié à ladite borne conductrice (22) et à un ressort (62), le ressort et le fil étant adaptés pour retenir la borne électroconductrice dans la base (12).

14. Commutateur de détection du niveau d'un fluide selon la revendication 1, dans lequel ladite borne conductrice dudit commutateur est reliée électriquement au système d'allumage d'un moteur et l'amortisseur conducteur est relié électriquement à un carter moteur électroconducteur.

15. Commutateur de détection du niveau d'un fluide selon la revendication 14, comprenant par ailleurs un fil attaché par une première extrémité à ladite borne (22) et par une seconde extrémité à une bobine de système d'allumage.

16. Commutateur de détection du niveau d'un fluide selon la revendication 1, dans lequel ledit commutateur (10) est adapté à une utilisation dans la surveillance du volume de fluide lubrifiant dans un carter de moteur à allumage par étincelle et est par ailleurs adapté pour mettre automatiquement à la masse le système d'allumage dans ledit moteur si le volume de fluide tombe sous un niveau prédéterminé.

17. Commutateur de détection du niveau d'un fluide selon la revendication 1, dans lequel ledit commutateur (10) est adapté à une utilisation dans la surveillance du volume de fluide lubrifiant dans un carter de moteur diesel et est par ailleurs adapté pour être utilisé pour interrompre automatiquement l'arrivée de carburant dans ledit moteur si le volume de fluide tombe sous un niveau prédéterminé.

18. Procédé de réalisation d'un commutateur de détection du niveau d'un fluide à utiliser pour surveiller un volume de fluide dans un réservoir et pour ouvrir et fermer automatiquement un circuit conformément à des niveaux de fluide prédéterminés dans le réservoir, le procédé consistant à :
installer dans un réservoir électroconducteur un commutateur de détection du niveau d'un fluide (10) comportant une
base (12), un flotteur (14) attaché à pivotement à la base, un contrepoids (16) attaché à pivotement à la base, un amortisseur électroconducteur (20) attaché à pivotement à la base, une borne électroconductrice (22) et un axe électroconducteur (24) relié à l'amortisseur conducteur et à la base et en contact avec le réservoir, en sachant que si un volume de fluide tombe sous un niveau suffisant prédéterminé, le flotteur pivote vers le bas, forçant le contrepoids (16) à pénétrer dans l'amortisseur conducteur (20), lequel établit pour sa part le contact avec la borne (22) de telle sorte que le commutateur, avec son axe conducteur (24), se ferme, et en sachant que la borne électroconductrice (22) est reliée au circuit et complète le circuit, **caractérisé en ce que** le commutateur comprend une tringlerie (18), la tringlerie (18) étant attachée à pivotement au flotteur (14) par une première extrémité et attachée à pivotement au contrepoids (16) par une seconde extrémité.

19. Procédé de réalisation d'un commutateur de détection du niveau d'un fluide selon la revendication 18, dans lequel lé commutateur (10) comprend par ailleurs un fil (58) pour relier la borne électroconductrice (22) audit circuit et un ressort (62) pour relier le fil à la borne.

20. Procédé de réalisation d'un commutateur de détection du niveau d'un fluide selon la revendication 19, dans lequel le ressort (62) et le fil (58) sont adaptés pour retenir la borne électroconductrice (22) dans la base (12).
